# EUROPEAN PATENT APPLICATION

(11) **EP 4 560 419 A1**
(43) Date of publication of application: **28.05.2025**
(21) Application number: 23211775.4
(22) Date of filing: 23.11.2023
(51) Int. Cl.: G05B 19/416, G05B 19/41

(54) **MACHINING A WORKPIECE BY MEANS OF A B-AXIS LATHE MACHINE**

(71) Applicant: Siemens Industry Software Inc., Plano, TX 75024 (US)
(72) Inventor: Brake, Sebastian, 50670 Köln (DE)
(74) Representative: Siemens Patent Attorneys

(57) **Abstract**

Method of machining a workpiece (WPC) by means of a B-axis lathe machine (MCH), where the method involves the continuous change of the angular position (AGP) of a turning tool (TTL), the method comprising the following steps:
(a) Providing a workpiece (WPC) raw contour geometry (RCG),
(b) Providing a workpiece (WPC) target contour geometry (TCG),
(c) Providing a predetermined chip thickness (CPT) as target chip thickness (CPT) during machining,
(d) Providing a tool path (TPT) of the turning tool (TTL),
(e) Providing preset angular positions (PAP) of the turning tool (TTL),
characterized by the method including the additional steps:
(f) Providing a feed map (FMP) that provides a feed rate (FDR),
(g) Splitting the tool path (TPT) segments (SGT) into tool path (TPT) subsegments (SSG) with a predefined segment length (SGL),
(h) Determining angular positions (AGP) at the segment (SGT) end positions (EPT) by interpolating (ITP) between the positions of specified tool angle (TAP),
(i) Determination of the feed rate (FDR) at the segment end positions (SGT) by specifying the respective preset local angular positions (PAP) to the feed map (FMP),
(j) Determining of a dynamic feed rate (DFR) and a dynamic angular position change (DAP) from an interpolation (ITP) along the segment (SGT) tool path (TPT) between the respective segment (SGT) end position (EPT) parameters,
and machining the workpiece (WPC) in such a way that the tool position is continuously changed between the preset angle positions, while the tool is moved along a tool path (TPT) according to a feed calculation based on the specified chip thickness (CPT).

## Description

### FIELD OF THE INVENTION

The invention relates to a method of machining a workpiece by means of a B-axis lathe machine, where the method involves the continuous change of the angular position of a turning tool, the method comprising the following steps:
(a) Providing a workpiece raw contour geometry,
(b) Providing a workpiece target contour geometry,
(c) Providing a predetermined chip thickness as target chip thickness during machining,
(d) Providing a tool path of the turning tool during machining of the target contour geometry,
(e) Providing preset angular positions of the turning tool along the tool path, which ensure the access of the turning tool to a workpiece contour during machining and which positions of specified tool angle of said preset angular positions divide the tool path in segments.

Furthermore, in accordance with the invention there is provided a B-axis lathe-machine comprising a tool path processor prepared for carrying out the method.

A B-axis lathe is a type of lathe that contains a B-axis, which is an additional axis of motion for the angular position of the turning tool in relation to the workpiece. In addition to the standard X and Y axes of movement of the turning tool, the B axis allows the rotary tool to rotate or pivot within the workplane. Due to the rotational movement of the turning tool along the B-axis, the angular inclination of the turning tool changes in relation to the main axis of rotation of the workpiece during turning. This rotational movement enables the machine to perform lathe machining of geometries where conventional turning tools may collide with the rotating workpiece without changing the lathe tool. Changing the lathe tool requires additional time. B-axis machines are therefore time efficient.

A constant chip thickness is beneficial in lathe machining for a consistent and smooth surface finish on the machined part, for reducing tool wear and extending the tool's lifespan, for an efficient chip evacuation, for enhanced dimensional accuracy and for reducing the likelihood of vibrations, chatter, or other undesirable machining phenomena.

Conventional B-axis lathe machines do not provide an automatic feed rate calculation based on a specified chip thickness. There is no solution known for turning tools with non-circular shaped inserts, in particular rhombic inserts, as the automatic feed rate calculation relies on the tool's orientation in relation to the cutting direction, making it only feasible to employ either one of these techniques.

The invention is based on the problem of improving the known method of machining a workpiece such that a further optimization regarding the named challenge is reached.

It is one object of the invention to enable machining according to the incipiently method with dynamic angle position change and automatic feed rate calculation such that preferably the machining chip thickness remains basically constant during machining.

### SUMMARY OF THE INVENTION

The object of the invention is achieved by the independent claims. The dependent claims describe advantageous developments and modifications of the invention.

More specifically the invention proposes a method of the incipiently mentioned type comprising the additional steps of:
(f) Providing a feed map that provides a feed rate at a given constant tool angle and given chip thickness,
(g) Splitting the tool path segments into tool path subsegments with a predefined segment length,
(h) Determining angular positions at the segment end positions by interpolating between the positions of specified tool angle,
(i) Determination of the feed rate at the segment end positions by specifying the respective preset local angular positions to the feed map,
(j) Determining of a dynamic feed rate and a dynamic angular position change from an interpolation along the segment tool path between the respective segment end position parameters,
and machining the workpiece in such a way that the tool position is continuously changed between the preset angle positions, while the tool is moved along a tool path according to a feed calculation based on the specified chip thickness.

The invention also relates to a B-axis lathe-machine comprising a tool path processor, the tool path processor being designed and prepared to perform the above defined method or one of its preferred embodiments as explained below.

In the context of this invention a dynamic feed rate calculation means that the feed rate is adjusted according to the angular position of the turning tool, wherein the angular position of the turning tool changes, too. The dynamic angular position change of the turning tool is defined mutatis mutandis. Conclusively this means that the angular position and feed rate are changing simultaneously and that these changes are aligned to each other in order to maintaining a specific - preferably constant chip thickness during machining.

In lathe machining, the feed rate refers to the speed at which the cutting tool moves along the workpiece surface during the machining process. This determines the rate at which the material is removed from the workpiece by the cutting tool.

In the context of this invention a feed rate is determined by the rotational speed of the workpiece (spindle speed) and the rate at which the cutting tool advances along the workpiece (feed per revolution). The feed rate is a critical parameter that affects the efficiency, accuracy, and surface finish of the machining operation and to achieve optimal chip formation, prevent tool wear, and ensure dimensional accuracy. The feed rate should be selected within the recommended range provided by the tool manufacturer to ensure safe and efficient lathe machining.

In the context of this invention the feed map provides a feed rate at a given constant tool angle and given chip thickness. This process may be explained in other words as:
1. the chip thickness may be set at a specific value to be constant over the complete machining;
2. the tool angles may be determined assuming a linear change between the specified tool angles along the tool path. This results in a number of equidistant locations along the tool path - these locations may be termed as the "base points";
3. the feed rates may be determined at these base points by said "feed map" by inputting chip thickness and tool angle and receiving the feed rate;
4. these steps 1-3 provide a tool angle and a feed rate for each base point enabling to interpolate the feed rate for the complete tool path. The tool angle is changing linear while the feed rate is interpolated preferably linearly between these base points.

The invention introduces a dynamic interpolation technique that divides each tool path segment into numerous sub-segments. This interpolation method is based on the angular variation of the turning tool, respectively the tool's insert in relation to the current cutting direction between the segment's beginning and end. The angular change per distance may be the parameter that determines the interpolation of each segment. By breaking the path into sufficiently small sub-segments, it becomes feasible to automatically and accurately compute an appropriate feed rate based on the specified chip thickness.

The invention and its preferred embodiments enhance the overall cutting process by ensuring a consistent chip thickness. The consistency of the chip thickness is a critical factor for lathe machining wherein chip breakage during machining is often prioritized. The automatic feed rate computation is valuable when optimizing tool life by preserving a constant chip thickness, especially when working with hard materials.

A preferred embodiment provides that during step (h) a linear rate of angular change along the segment tool path is assumed. This assumption is reasonable in particular to simplify the determination of the angular positions in between.

During step (h) the angular change may determine the length of sub-segments of interpolation. A segment may be split up in a number of equidistant sub-segments. E.g., all sub-segments may have an angular change of 1deg.

A preferred embodiment provides that during step (i) a linear feed rate change and a linear angular position change is assumed for interpolation along the segment tool path between the respective segment end position parameters.

In other words that means that the feed rate and the 'range of angular change' may determine the interpolation such that a segment may be split up in a number of non-equidistant sub-segments. E.g., each segment has a feed rate change of 0.1mmpr [millimeter per rotation] but depending on the start/end angle the length of each sub-segment might be different.

A preferred embodiment provides that during step (j) a linear angular position change is assumed for interpolation along the segment tool path between the respective segment endpoint parameters. This simplification enables quick and accurate results.

Another preferred embodiment provides that during step (g) said predefined subsegment length when splitting the tool path into tool path segments is provided by the steps:
- providing a subsegment angle change increment,
- determining a segment angle change as a difference between the preset angular positions for the segment end positions,
- splitting the segments into subsegments and distributing the tool angle change of the segment to angle change portions of said subsegments so that each subsegment has a tool angle change portion below said subsegment angle change increment.

An alternative preferred embodiment provides that during step (g) said predefined subsegment length when splitting the tool path into tool path segments is provided by the steps:
- providing a subsegment feed rate change increment,
- determining a segment feed rate change as a difference between the feed rates at the segment end positions,
- splitting the segments into subsegments and distributing the segment feed rate change to feed rate change portions of said subsegments so that each subsegment has a feed rate change portion below said subsegment angle change increment.

Since the calculation of the feed rate based on the chip thickness, which is to be kept constant, depends on a trigonometric function. This option may lead to even more accurate results.

Another preferred embodiment provides that said segment is split in subsegments of equal tool path length. This assumption enables a quick segmentation.

A similar preferred embodiment provides that said tool angle change of the segment is split in angle change portions of said subsegments of equal angle change.

Another preferred embodiment provides that said tool angle change of the segment is split in feed rate change portions of said subsegments of equal feed rate change. This embodiment leads to accurate results.

Another preferred embodiment provides that the turning tool has a rhomboid insert for cutting the workpiece material. Other preferred embodiments provide that the turning tool or an insert of the turning tool is shaped like a parallelogram or rhombic or hexagonal or rectangular or octagonal or pentagonal or square or triangular or trigonal.

### BRIEF DESCRIPTION OF THE DRAWINGS

A preferred embodiment of the invention is now described, by way of example only, with reference to the accompanying drawing, wherein:

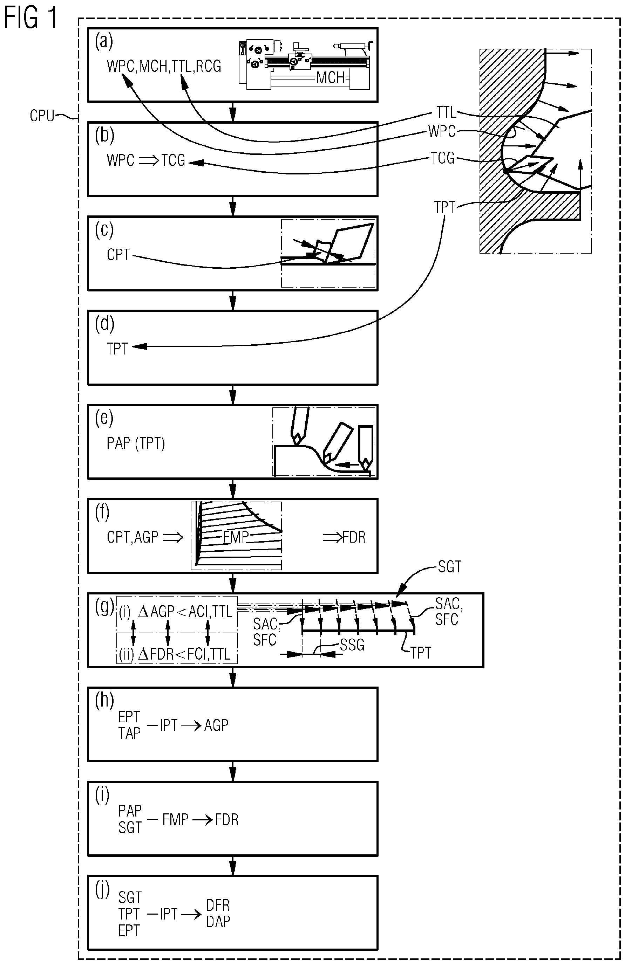

- Figure 1: shows a block diagram of a method according to the invention.

The illustration in the drawings is in schematic form. It is noted that at different positions, similar or identical elements may be provided with the same reference signs.

### DESCRIPTION OF THE DRAWINGS

Figure 1 shows a schematic flow block diagram illustrating the method according to the invention. Figure 1 refers to the steps according to the invention as claimed by using the same references (a) - (j) as in the claims.

Figure 1 illustrates a method of machining a workpiece WPC by means of a B-axis lathe machine MCH according to the invention. The method involves the continuous change of the angular position AGP of a turning tool TTL while machining the workpiece with a dynamically changing feed rate FDR.

In order to keep a chip thickness CPT of the material removed during the lathe machining constant, the method comprises the following steps.
Step (a) relates to providing a workpiece WPC raw contour geometry RCG.
Step (b) relates to providing a workpiece WPC target contour geometry TCG.
Step (c) relates to providing a predetermined chip thickness CPT as target chip thickness CPT during machining.
Step (d) relates to providing a tool path TPT of the turning tool TTL during machining of the target contour geometry TCG.
Step (e) relates to providing preset angular positions PAP of the turning tool TTL along the tool path TPT, which ensure the access of the turning tool TTL to a workpiece WPC contour during machining MCH and which positions of specified tool angle TAP of said preset angular positions PAP divide the tool path TPT in segments SGT.
Step (f) relates to providing a feed map FMP that provides a feed rate FDR at a given constant tool angle and given chip thickness CPT.
Step (g) relates to splitting the tool path TPT segments SGT into tool path TPT subsegments SSG with a predefined segment length SGL. Said segment SGT is split in subsegments SSG of equal tool path TPT length. When applying step (g) two different options may alternatively be applied for determining said predefined subsegment SSG length when splitting the tool path TPT into tool path TPT segments SGT (these options are referenced in figure 1 by "ΔAGP<ACI, TTL" and "ΔFDR<FCI, TTL"):
   (i) The first option is performed by the steps of:
      - providing a subsegment angle change increment ACI,
      - determining a segment angle change SAC as a difference between the preset angular positions PAP for the segment SGT end positions EPT,
      - splitting the segments SGT into subsegments SSG and distributing the tool angle change of the segment SGT to angle change portions of said subsegments SSG so that each subsegment SSG has a tool angle change portion below said subsegment angle change increment ACI. When applying this option preferably said tool angle change of the segment SGT is split in angle change portions of said subsegments SSG of equal angle change.
   (ii) The second option is performed by the steps of:
      - providing a subsegment feed rate change increment FCI,
      - determining a segment feed rate change SFC as a difference between the feed rates FDR at the segment end positions SGT,
      - splitting the segments SGT into subsegments SSG and distributing the segment feed rate change SFC to feed rate change portions of said subsegments SSG so that each subsegment SSG has a feed rate change portion below said subsegment angle change increment FCI. When applying this option said tool angle change of the segment SGT is split in feed rate change portions of said subsegments SSG of equal feed rate change.
Step (h) relates to determining angular positions AGP at the segment SGT end positions EPT by interpolating ITP between the positions of specified tool angle TAP. During step (h) a linear rate of angular change along the segment SGT tool path TPT is assumed.
Step (i) relates to determining of the feed rate FDR at the segment end positions SGT by specifying the respective preset local angular positions PAP to the feed map FMP. During step (i) a linear feed rate FDR change and a linear angular position AGP change are assumed for interpolation ITP along the segment SGT tool path TPT between the respective segment SGT end position EPT parameters.
Step (j) relates to determining of a dynamic feed rate DFR and a dynamic angular position change DAP from an interpolation ITP along the segment SGT tool path TPT between the respective segment SGT end position EPT parameters. During step (j) a linear angular position AGP change is assumed for interpolation ITP along the segment SGT tool path TPT between the respective segment SGT endpoint parameters.

These method steps serve the purpose that the tool position is continuously changed between the preset angle positions, while the tool is moved along a tool path TPT according to the feed calculation based on the specified chip thickness CPT.

As illustrated in step (c) or (f) the turning tool TTL may have a rhomboid insert INS for cutting the workpiece WPC material MAT. Other shapes are possible as well as described in the general description part.

The lathe-machine MCH as symbolized in the block of step (a) may comprise a tool path processor CPU. The tool path processor CPU may be designed and prepared to perform the method according to the invention or one of its preferred embodiments.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Independent of the grammatical term usage, individuals with male, female or other gender identities are included within the term.

## Claims

1. Method of machining a workpiece (WPC) by means of a B-axis lathe machine (MCH), where the method involves the continuous change of the angular position (AGP) of a turning tool (TTL), the method comprising the following steps:
(a) Providing a workpiece (WPC) raw contour geometry (RCG),
(b) Providing a workpiece (WPC) target contour geometry (TCG),
(c) Providing a predetermined chip thickness (CPT) as target chip thickness (CPT) during machining,
(d) Providing a tool path (TPT) of the turning tool (TTL) during machining of the target contour geometry (TCG),
(e) Providing preset angular positions (PAP) of the turning tool (TTL) along the tool path (TPT), which ensure the access of the turning tool (TTL) to a workpiece (WPC) contour during machining (MCH) and which positions of specified tool angle (TAP) of said preset angular positions (PAP) divide the tool path (TPT) in segments (SGT),
**characterized by** the method including the additional steps:
(f) Providing a feed map (FMP) that provides a feed rate (FDR) at a given constant tool angle and given chip thickness (CPT),
(g) Splitting the tool path (TPT) segments (SGT) into tool path (TPT) subsegments (SSG) with a predefined segment length (SGL),
(h) Determining angular positions (AGP) at the segment (SGT) end positions (EPT) by interpolating (ITP) between the positions of specified tool angle (TAP),
(i) Determining of the feed rate (FDR) at the segment end positions (SGT) by specifying the respective preset local angular positions (PAP) to the feed map (FMP),
(j) Determining of a dynamic feed rate (DFR) and a dynamic angular position change (DAP) from an interpolation (ITP) along the segment (SGT) tool path (TPT) between the respective segment (SGT) end position (EPT) parameters, and machining the workpiece (WPC) in such a way that the tool position is continuously changed between the preset angle positions, while the tool is moved along a tool path (TPT) according to a feed calculation based on the specified chip thickness (CPT).

2. Method of machining a workpiece according to claim 1, wherein during step (h) a linear rate of angular change along the segment (SGT) tool path (TPT) is assumed.

3. Method of machining a workpiece according to claim 1 or 2, wherein during step (i) a linear feed rate (FDR) change and a linear angular position (AGP) change is assumed for interpolation (ITP) along the segment (SGT) tool path (TPT) between the respective segment (SGT) end position (EPT) parameters.

4. Method of machining a workpiece according to one of the preceding claims, wherein during step (j) a linear angular position (AGP) change is assumed for interpolation (ITP) along the segment (SGT) tool path (TPT) between the respective segment (SGT) endpoint parameters.

5. Method of machining a workpiece according to one of the preceding claims, wherein during step (g) said predefined subsegment (SSG) length when splitting the tool path (TPT) into tool path (TPT) segments (SGT) is provided by the steps:
- providing a subsegment angle change increment (ACI),
- determining a segment angle change (SAC) as a difference between the preset angular positions (PAP) for the segment (SGT) end positions (EPT),
- splitting the segments (SGT) into subsegments (SSG) and distributing the tool angle change of the segment (SGT) to angle change portions of said subsegments (SSG) so that each subsegment (SSG) has a tool angle change portion below said subsegment angle change increment (ACI).

6. Method of machining a workpiece according to one of the preceding claims 1-4, wherein during step (g) said predefined subsegment (SSG) length when splitting the tool path (TPT) into tool path (TPT) segments (SGT) is provided by the steps:
- providing a subsegment feed rate change increment (FCI),
- determining a segment feed rate change (SFC) as a difference between the feed rates (FDR) at the segment end positions (SGT),
- splitting the segments (SGT) into subsegments (SSG) and distributing the segment feed rate change (SFC) to feed rate change portions of said subsegments (SSG) so that each subsegment (SSG) has a feed rate change portion below said subsegment angle change increment (FCI).

7. Method of machining a workpiece according to one of the preceding claims 5 or 6, wherein said segment (SGT) is split in subsegments (SSG) of equal tool path (TPT) length.

8. Method of machining a workpiece according to claim 5, wherein said tool angle change of the segment (SGT) is split in angle change portions of said subsegments (SSG) of equal angle change.

9. Method of machining a workpiece according to claim 6, wherein said tool angle change of the segment (SGT) is split in feed rate change portions of said subsegments (SSG) of equal feed rate change.

10. Method of machining a workpiece according to one of the preceding claims, wherein the turning tool (TTL) has a rhomboid insert (INS) for cutting the workpiece (WPC) material (MAT).

11. B-axis lathe-machine (MCH) comprising a tool path processor (CPU), the tool path processor (CPU) being designed and prepared to perform the method according to at least one of the claims 1-10.
